Europäisches Patentamt

European Patent Office

Office européen des brevets

(11) Veröffentlichungsnummer: **0 290 785 B1**

# (12) EUROPÄISCHE PATENTSCHRIFT

(45) Veröffentlichungstag der Patentschrift: 02.10.91

(51) Int. Cl.⁵: **B60T 13/14**

(21) Anmeldenummer: 88105587.5

(22) Anmeldetag: 08.04.88

(54) **Bremskraftverstärker.**

(30) Priorität: 09.05.87 DE 3715569

(43) Veröffentlichungstag der Anmeldung:
17.11.88 Patentblatt 88/46

(45) Bekanntmachung des Hinweises auf die
Patenterteilung:
02.10.91 Patentblatt 91/40

(84) Benannte Vertragsstaaten:
**DE FR GB SE**

(56) Entgegenhaltungen:
**DE-A- 2 527 928**
**DE-B- 1 173 709**

(73) Patentinhaber: **ROBERT BOSCH GMBH**
**Postfach 50**
**W-7000 Stuttgart 1(DE)**

(72) Erfinder: **Bertling, Hannes, Dr. Dipl.-Ing.**
**Alter Postweg 37**
**W-7143 Vaihingen/Enz(DE)**
Erfinder: **Mergenthaler, Robert**
**Geranienweg 17**
**W-7145 Markgröningen(DE)**
Erfinder: **Schmitt, Edgar, Ing. grad.**
**Am Wolfsberg 111**
**W-7143 Vaihingen/Enz(DE)**
Erfinder: **Siegel, Heinz, Ing. grad.**
**Hohenloher Strasse 86**
**W-7000 Stuttgart 40(DE)**

## Beschreibung

Die Erfindung betrifft einen Bremskraftverstärker nach dem Oberbegriff des Anspruchs 1, wie er z.B. durch die DE-A-2527928 bekannt ist. Zur Steigerung der Bremswirkung werden bei Fahrzeugen zwischen Bremspedal und Bremssystem Bremskraftverstärker eingeschaltet, welche die Aufgabe haben, die auf das Pedal eingeleitete Kraft zu verstärken. Die bekannten Bremskraftverstärker enthalten ein Bremsventil, welches über das Bremspedal geöffnet wird und dadurch ein unter Druck stehendes Medium auf einen Verstärkerkolben wirken läßt, der wiederum eine Bremskraft erzeugt. Ein bei diesen Bremsventilen verwendeter Schieber wird üblicherweise an mindestens zwei Stellen gelagert. Durch Bearbeitungstoleranzen liegt der Schieber unter Umständen nicht zentrisch zu dem als Gegenstück ausgebildeten Ventilsitz, und muß daher über eine ausreichend große Federkraft in den Ventilsitz gedrückt werden.

Die Vermeidung dieser Nachteile wird bei einem Verstärker der gattungsgemäßen Art durch die kennzeichnenden Merkmale des Anspruchs 1 erzielt.

Wird der Schieber mit ausreichendem Spiel in einer Hülse gelagert, so kann sich der Ventilkegel leicht im Ventilsitz des Bremsventils zentrieren. Wichtig ist es hierbei, den Scheiber in verhältnismäßig großem Abstand vom Ventilsitz zu lagern, da dann durch den großen Hebelarm nur kleine Ausrichtkräfte zum Zentrieren des Ventilkegels im Ventilsitz erforderlich sind. Eine weitere Ausbildung der Erfindung sieht vor, einen zweiteiligen Schieber zu verwenden, bei dem die beiden Lagerstellen voneinander entkoppelt sind, so daß sich beide Teile geringfügig gelenkartig zueinander bewegen lassen. Hierdurch wird das Zentrieren des Ventilkegels, der an der Stirnseite eines Teiles angeformt ist, im Ventilsitz erleichtert. Die Federkräfte können bei beiden Ausbildungen reduziert werden, was wiederum die Betätigungskräfte reduziert. Außerdem werden einfache Teile verwendet, die kostengünstig herzustellen sind.

Die Erfindung wird nachfolgend anhand der Zeichnungen näher erläutert. Es zeigen:
Figur 1 einen erfindungsgemäßen Bremskraftverstärker;
Figur 2 eine weitere Ausführung eines erfindungsgemäßen Bremskraftverstärkers;
Figur 3 einen vergrößerten Ausschnitt aus Figur 2 im Bereich der Anlageflächen;
Figur 4 einen vergrößerten Ausschnitt einer weiteren Ausführung im Bereich der Anlageflächen.

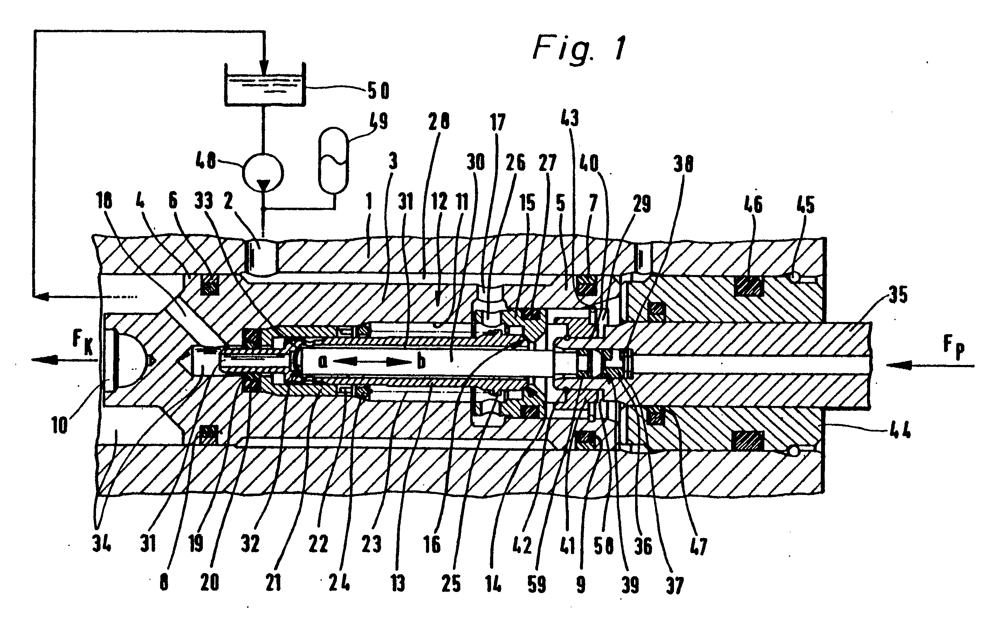

In einem in Figur 1 dargestellten Gehäuse 1 mit Bohrung 2 zum Einleiten einer Hydraulikflüssigkeit ist ein Verstärkerkolben 3 verschiebbar gelagert. Der Verstärkerkolben 3 ist am Umfang mit zwei Bünden 4, 5 versehen, wobei der Bund 5 einen geringfügig größeren Außendurchmesser besitzt. Zur Aufnahme von Dichtungen 6, 7 dienen an den Bünden 4, 5 zwei Ringnuten 8, 9. Am stirnseitigen Ende des Verstärkerkolbens 3 ist eine halbkugelförmige Vertiefung 10 eingeformt, die zur Aufnahme eines nicht dargestellten Bolzens dient, der mit dem Hauptbremszylinder verbunden ist. Der Verstärkerkolben 3 besitzt eine stufenförmige axiale Bohrung 11, die zur Aufnahme des Bremsventils 12 dient. Das Bremsventil 12 besteht im wesentlichen aus einem Schieber 13 mit einem stirnseitig angeformten Ventilkegel 14 und einer Ventilbuchse 15 mit einem Ventilsitz 16. Zur Versorgung des Bremsventils 12 mit Hydraulikflüssigkeit ist im Verstärkerkolben 3 eine Bohrung 17 vorgesehen. Als Rücklauf dient eine Bohrung 18. In die stufenförmige Bohrung 11 ist zur Abdichtung des Schiebers 13 eine statische Dichtung 19 eingeschoben, die an ihrem Außendurchmesser von einer dynamischen Dichtung 20 umfaßt wird. Beide Dichtungen werden mit der Stirnseite einer Hülse 21, in welcher der Schieber 13 mit geringfügigem Spiel gelagert ist, in axialer Richtung gehalten. An der anderen Stirnseite der Hülse ist eine Dichtung 22 angordnet, die ebenfalls zur Abdichtung des Schiebers 13 dient. Der Ventilkegel 14 des Schiebers 13 wird von einer Feder 23, die sich an einer Scheibe 24 und einem am Schieber 13 angeformten ringförmigen Absatz 25 abstützt, in den Ventilsitz 16 der Ventilbuchse 15 gedrückt. Die Ventilbuchse 15 besitzt eine Querbohrung 26 als Durchlaß für die Hydraulikflüssigkeit und ist am Umfang mit einer statischen Dichtung 19 abgedichtet. Ventilkegel 14 und Ventilbuchse 15 bilden ein äußeres Ventil, das zum Einlassen der unter Druck stehenden Hydraulikflüssigkeit von einem Druckraum 28 in einen Arbeitsraum 29 dient. Zum Öffnen dieses Ventils ist eine Druckstange 30 vorgesehen, die in der Bohrung 36 das Pedalstößel 35 mit geringfügigem Spiel beweglich gelagert ist. Zum Pedalstößel 35 hin wird die Druckstange 30 mit der statischen Dichtung 59 abgedichtet. Die im Schieber 13 liegende Stirnseite 32 der Druckstange 30 besitzt eine kugelige Fläche und bildet zusammen mit einem schrägen Absatz 33 der stufenförmigen axialen Durchgangsbohrung 31 ein in dieser Stellung geöffnetes inneres Ventil. Das innere Ventil dient zum Auslassen der Hydraulikflüssigkeit vom Arbeitsraum 29 in einen drucklosen Raum 34. Der aus dem Schieber 13 herausragende Teil der Druckstange führt zu einem Pedalstößel 35, der mit einem nicht dargestellten Bremspedal verbunden ist. An der Stirnseite des Pedalstößels 35 befindet sich eine Bohrung 36 in die ein Stützkörper 37 und Ausgleichsscheiben 38 eingesetzt sind. Das Ende der Druckstange 30 ist ebenfalls in die Bohrung 36 eingesetzt und stützt sich dort mit der anderen ebenfalls kugelförmigen Stirnseite 39 an dem Stützkörper 37 ab. Auf den an diesem Ende zapfenartig ausgebildeten Ansatz 40 des Pedalstößels 35 ist ein Druckring 41 aufgeschoben, der in axialer Richtung auf dem Pedalstößel 35 mit einem Sprengring 42 und im Verstärkerkolben mit einem weiteren Sprengring 43 gehalten wird. Der Pedalstößel 35 ist in einer Führungsbuchse 44 gelagert, die mit einem Sprengring 45 im Gehäuse 1 axial gehalten wird. Zum Gehäuse hin wird die Führungsbuchse 44 mit einer statischen Dichtung 46, zum Pedalstößel 35 hin mit einer dynamischen Dichtung 47 abgedichtet. Zur Versorgung der gesamten Anordnung mit Hydraulikflüssigkeit dient eine Pumpe 48 mit Druckspeicher 49 und Reservoir 50.

Die Funktionsweise des erfindungsgemäßen Bremsventils für Bremskraftverstärker ist folgende: Beim Betätigen eines nicht dargestellten Bremspedals wird eine Kraft $F_P$ auf den Pedalstößel 35 eingeleitet und bewegt ihn in Richtung a. Die Druckstange 30, die sich über den Stützkörper 37 und die Ausgleichsscheiben 38 am Pedalstößel 35 abstützt, wird ebenfalls in Richtung a bewegt, so daß sie mit der Stirnseite 32 am schrägen Absatz 33 anstößt und den Schieber 13 in Richtung a mitnimmt. Hierbei wird das innere Ventil geschlossen und gleichzeitig das äußere Ventil geöffnet. Dabei fördert die Pumpe 48 mit Druckspeicher 49 die Hydraulikflüssigkeit mit Überdruck in den sich vergrößernden Arbeitsraum 29. Der im Druckraum 28 herrschende Druck baut sich ebenso im Arbeitsraum 29 auf, wirkt auf den Verstärkerkolben 3 und bewegt ihn in Richtung a. Gleichzeitig wird die im Raum 34 befindliche Hydraulikflüssigkeit vom Verstärkerkolben 3 ins Reservoir 50 zurückgefördert. Ein nicht dargestellter Bolzen, der in der halbkugelförmigen Vertiefung 10 an der Stirnseite des Verstärkerkolbens 3 gelagert ist, überträgt die erzeugte Kraft $F_K$ auf den Hauptbremszylinder. Die Bewegung des Verstärkerkolbens 3 dauert so lange an, bis der Ventilsitz 24, der sich im Verstärkerkolben 3 mitbewegenden Ventilbuchse 15, wieder am Ventilkegel 14 des Schiebers 13 anliegt und das äußere Ventil dadurch geschlossen ist. Wird das Bremspedal weiter betätigt, so wiederholt sich dieser Vorgang. Beim Entlasten des Bremspedals bewegen sich der Pedalsstößel 35 und die Druckstange 30 in Richtung b, wobei die Stirnseite 32 der Druckstange 30 vom Absatz 33 abgehoben wird. Somit ist das innere Ventil geöffnet, während das äußere Ventil geschlossen bleibt. Der im Arbeitsraum 29 herrschende Druck wird über das geöffnete Ventil und die Durchgangsbohrung 31 zum drucklosen Raum 34 hin abgebaut. Der im Druckraum 28 ständig herrschende Überdruck bewirkt, daß an der Differenzfläche, die durch den geringfügig größeren Durchmesser des Bundes 5 entsteht, eine Rückstellkraft angreift, die den gesamten Verstärkerkolben 3 in Richtung b bewegt. Die im Arbeitsraum 29 befindliche Hydraulikflüssigkeit kann dabei über die Durchgangsbohrung 31 im Schieber 13 und das geöffnete innere Ventil in den Raum 34 gelangen. Der Verstärkerkolben 3 bewegt sich solange das innere Ventil geöffnet ist. Liegt der Absatz 33 wieder an der Stirnseite 32 der Druckstange an, so wird der Abfluß der Hydraulikflüssigkeit aus dem Arbeitsraum 29 unterbrochen und der Verstärkerkolben 3 kommt zum Stillstand. Erst wenn das Bremspedal ganz entlastet wird, geht der Verstärkerkolben 3 in die Ausgangsstellung zurück und das innere Ventil bleibt geöffnet. Bei einem Druckverlust im Raum 28 bleibt die Funktion der Anordnung mit verminderter Bremswirkung erhalten. In diesem Fall stößt der Pedalstößel 35 beim Betätigen des Bremspedals mit dem Absatz 58 gegen die Stirnseite des Druckringes 41. Der wiederum überträgt die auf den Pedalstößel 35 eingeleitete Kraft $F_P$ über die Ventilbuchse 15, den Verstärkerkolben 3 und den nicht dargestellten Bolzen auf den Hauptbremszylinder.

Durch die mit ausreichend Spiel versehene Lagerung des Schiebers 13 in der Hülse 21 und den verhältnismäßig großen Abstand der Lagerung zum Ventilsitz 16 ergibt sich für den Schieber 13 eine geringfügige Schwenkbarkeit um den Bereich der Lagerstellen, wodurch das Schließen des Ventilkegels 14 am Ventilsitz 16 erleichtert wird. Der Ventilkegel 14 kann dadurch mit verhältnismäßig geringer Federkraft selbst bei vorhandenen Lagerungstoleranzen bzw. Ventilsitztoleranzen in den Ventilsitz 16 exakt eingeführt werden.

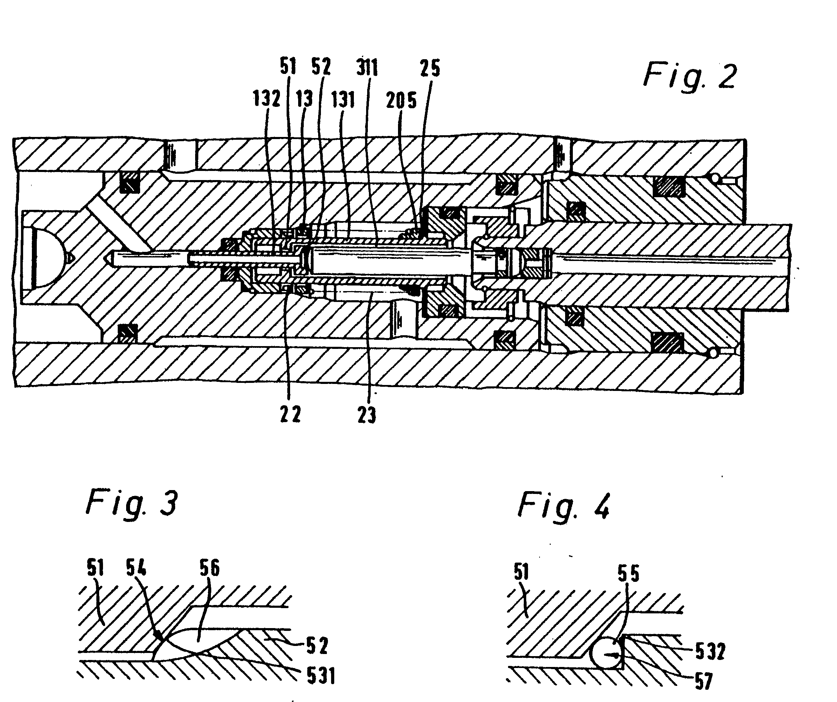

Die in Figur 2 dargestellte Ausführung eines Bremskrafverstärkers unterscheidet sich von Figur 1 im wesentlichen durch einen zweiteilig ausgeführten Schieber 13, der aus einem Außenteil 131 und einem Innenteil 132 besteht. In der Durchgangsbohrung 311 des Außenteils 131 ist ein Bund 51 angeformt. Das Innenteil 132 ist am Außendurchmesser ebenfalls mit einem Bund 52 versehen und mit ausreichend vorhandenem Spiel durch das Außenteil 131 hindurchgeschoben. Dabei liegt wie in Figur 3 dargestellt die kugelförmig ausgebildete Stirnseite 531 des Bundes 52 an der kegelig ausgeführten Stirnseite 54 des Bundes 51. Bei einer in Figur 4 dargestellten Variante ist ein Sprengring 55 eingesetzt, der sich zwischen der kegeligen Stirnseite 51 und einer hier gerade ausgebildeten Stirnseite 532 abstützt. Der zweiteilige Schieber 13 nach Figur 3 ist auch hier mit etwas Spiel in der Hülse 21 gelagert. Dies bewirkt zusammen mit dem vorhandenen Spiel zwischen Außenteil 131 und Innenteil 132, daß sich beide Teile geringfügig zueinander um den Anlagepunkt der Stirnseiten 51 und 52 bzw. 51 und 532 schwenken läßt. Die zum Abdichten des Schiebers benötigte Dichtung 22 ist in Höhe des Anlagepunktes angeordnet. Der bei Betrieb der Anordnung erforderliche Druckausgleich der Dichtung 22 wird entweder wie in Figur 3 dargestellt durch eine Nut 56 im Bund 52 erreicht, oder bei der Variante nach Figur 4 durch einen Spalt 57 im Sprengring 55. Im weiteren ist der ringförmige Absatz 20 kleiner ausgebildet, so daß sich die Feder 23 nicht mehr unmittelbar, sondern über einen Stützring 205 daran abstützt. Durch eine andere Anordnung der Bohrung 17 im Verstärkerkolben 3 kann die Querbohrung in der Ventilbuchse entfallen. Diese Unterschiede sind für die Funktion des Bremsventils nicht entscheidend. Diese ist dieselbe wie schon bei Figur 1 beschrieben.

Durch die zweiteilige Ausführung und die mit Spiel versehene Lagerung des Schiebers 13 in der Hülse 21, ergibt sich auch hier eine geringfügige Schwenkbarkeit des Schiebers 13, die das Zentrieren des Ventilkegels 14 im Ventilsitz 16 bei geringer Federkraft ermöglicht.

**Patentansprüche**

1. Bremskraftverstärker mit einem in einem Gehäuse (1) verschiebbaren Verstärkerkolben (3), mit einem gleichsachsig angeordneten Bremsventil (12), das einen per Bremspedal verschiebbaren Pedalstößel (35), ein über den Pedalstößel (35) schließbares Auslaßbremsventil (32, 33) mit einem im Verstärkerkolben (3) untergebrachten Auslaß-Ventilsitz (33) und einem Auslaß-Schließelement (32) sowie ein Einlaßbremsventil (14, 16) aufweist, das einen Einlaß-Ventilsitz (16) und ein Einlaß-Schließelement (14) aufweist, wobei dieses Einlaß-Schließelement (14) an einem rohrartigen Ventilschieber (13) angeformt ist, der in einem großen axialen Abstand vom Einlaß-Ventilsitz (16) im Bereich einer elastischen Dichtung (22) axial beweglich gelagert und das Einlaßschließelement mit Federkraft (23) gegen den Einlaß-Ventilsitz (16) preßbar ist, und wobei der Ventilschieber (13) im Innern eine Durchgangsbohrung (31) aufweist und den Auslaß-Ventilsitz (33) aufnimmt, dadurch gekennzeichnet, daß der Einlaß-Ventilsitz (16) im Verstärkerkolben (3) fixiert und als Kegelfläche ausgebildet ist, die sich in Arbeitsrichtung des Verstärkerkolbens (3) öffnet, daß sich der Ventilschieber (13) vom Bereich des Einlaß-Ventilsitzes (16) in Arbeitsrichtung des Verstärkerkolbens (3) erstreckt und in dem großen axialen Abstand vom Einlaß-Ventilsitz (16) im Bereich der elastischen Dichtung (22) schwenkbeweglich gelagert ist, daß der Auslaß-Ventilsitz (33) als Kegelfläche ausgebildet ist, die sich zum Pedalstößel (35) hin öffnet, und daß das Auslaß-Schließelement (32) von einer eine kugelige Fläche aufweisenden Stirnseite (32) einer Druckstange (30) gebildet ist, die sich durch die Durchgangsbohrung (31) erstreckt, aus dieser Durchgangsbohrung (31) herausragt und mit ihrer anderen Stirnseite (39) schwenkbeweglich im Pedalstößel (35) gelagert ist.

2. Bremskraftverstärker nach Anspruch 1, dadurch gekennzeichnet, daß der Ventil-Schieber (13) zweiteilig ist, daß die Lagerung wenigstens eines seiner beiden Teile (131, 132) mit Spiel versehen ist, und daß die beiden Teile gelenkartig miteinander in Verbindung stehen.

3. Bremskraftverstärker nach Anspruch 2, dadurch gekennzeichnet, daß wenigstens eines der beiden Teile (131, 132) hülsenförmig ausgebildet ist, daß das eine Teil (132) mit Spiel durch das andere Teil (131) hindurchgeführt ist, und daß die beiden Teile in axialer Richtung mit Anlageflächen aneinander anliegen, die bei dem einen Teil (132) von einem Bund (52) am Außendurchmesser, beim anderen Teil (131) von einem Bund (51) am Innendurchmesser gebildet werden.

4. Bremskraftverstärker nach Anspruch 3, dadurch gekennzeichnet, daß die Anlagefläche (531) des einen Teiles eine im Querschnitt kugelige Form besitzt, die ein gelenkartiges Bewegen der beiden Teile (131, 132) zueinander ermöglicht.

5. Bremskraftverstärker nach Anspruch 3, dadurch gekennzeichnet, daß zwischen die Anlageflächen der beiden Teile (131, 132) ein Sprengring (55) eingelegt ist und sich dadurch eine gelenkartige Verbindung ergibt.

**Claims**

1. Servo brake having a servo piston (3), which is displaceable in a housing (1), having a coaxially arranged brake valve (12), which has a pedal tappet (35), displaceable by a brake pedal, an outlet brake valve (32, 33), closable via the brake tappet (35) and having an outlet valve seat (33), accommodated in the servo piston (3), and an outlet closing element (32), as well as an inlet brake valve (14, 16) which has an inlet valve seat (16) and an inlet closing element (14), in which arrangement this inlet closing element (14) is formed onto a tubular valve spool (13), which is mounted axially movably at a great axial distance from the inlet valve seat (16) in the region of a flexible seal (22) and the inlet closing element can be pressed by spring force (23) against the inlet valve seat (16), and in which arrangement the valve spool (13) has inside a through-bore (31) and receives the outlet valve seat (33), characterised in that the inlet valve seat (16) is fixed in the servo piston (3) and is designed as a conical surface which opens in the working direction of the servo piston (3), in that the valve spool (13) extends from the region of the inlet valve seat (16) in the working direction of the servo piston (3) and is mounted swivel-movably at the great axial distance from the inlet valve seat (16) in the region of the flexible seal (22), in that the outlet valve seat (33) is designed as a conical surface which opens towards the pedal tappet (35), and in that the outlet closing element (32) is formed by an end face (32), having a conical surface, of a pressing rod (30) which extends through the through-bore (31), protrudes from this through-bore (31) and, with its other end face (39), is mounted swivel-movably in the pedal tappet (35). the associated closing element (14) as a (sic)

2. Servo brake according to Claim 1, characterised in that the valve spool (13) is of two parts, in that the mounting of at least one of its two parts (131, 132) is provided with play, and in that the two parts are in connection with each other in an articulated manner.

3. Servo brake according to Claim 2, characterised in that at least one of the two parts (131, 132) is of a sleeve-shaped design, in that the one part (132) is led with play through the other part (131), and in that the two parts bear in the axial direction against each other with contact surfaces which are formed in the case of the one part (132) by a collar (52) on the outside diameter, in the case of the other part (131) by a collar (51) on the inside diameter.

4. Servo brake according to Claim 3, characterised in that the contact surface (531) of the one part has a cross-sectionally conical shape, which makes it possible for the two parts (131, 132) to move in an articulated manner with respect to each other.

5. Servo brake according to Claim 3, characterised in that a circlip (55) is inserted between the contact surfaces of the two parts (131, 132) and an articulated type of connection is produced as a result.

**Revendications**

1. Servo-frein avec un piston amplificateur (3) pouvant coulisser dans un boîtier (1) avec une soupape de frein (12) coaxiale, qui présente un poussoir de pédale (35) actionnable par la pédale de frein, une soupape (32, 33) de sortie de frein obturable par le poussoir de frein (35) avec un siège de soupape de sortie (33) inséré dans un piston amplificateur (3) et un élément (32) de fermeture de sortie ainsi qu'une soupape d'entrée de frein (14, 16), qui présente un siège (16) de soupape d'entrée et un élément (14) de fermeture d'entrée, cet élément (14) de fermeture d'entrée étant formé sur un coulisseau tubulaire (13) de soupape qu'on loge de manière mobile axialement à une grande distance axiale du siège de soupape (16) d'entrée dans le domaine d'un joint élastique (22) et on peut appuyer l'élément de fermeture de sortie avec la force d'un ressort (23) contre le siège d'entrée de soupape (16), le coulisseau de soupape (13) présentant à l'intérieur un perçage de passage (31) recevant le siège de soupape de sortie (33), caractérisé en ce que le siège de soupape d'entrée (16) est fixé dans le piston amplificateur (3) et qu'il est de forme conique qui s'ouvre dans le sens de fonctionnement du piston amplificateur (3), que le coulisseau de soupape (13) s'étend depuis le siège de soupape (16) d'entrée dans le sens de fonctionnement du piston amplificateur (3) et qu'il est logé à une grande distance axiale du siège de soupape (16) d'entrée dans le domaine du joint élastique (22) de façon à pouvoir pivoter, que le siège de soupape de sortie (33) est de forme conique, qui s'ouvre vers le poussoir de pédale (35), et que l'élément de fermeture de sortie (32) est formé d'une tige de pression (30) ayant une face frontale présentant une surface sphérique (32), qui s'étend à travers le perçage de passage (31) et sort de ce perçage de passage (31) et est logée par son autre face frontale (39) de manière à pivoter dans le poussoir (35) de pédale.

2. Servo-frein selon la revendication 1, caractérisé en ce que le coulisseau de soupape (13) est en deux parties, que le logement d'au moins une de ses deux pièces (131, 132) a du jeu, et que les deux pièces sont reliées l'une à l'autre par une articulation.

3. Servo-frein selon la revendication 2, caractérisé en ce qu'au moins l'une des deux pièces (131, 132) est en forme de gaine, que l'une des pièces (132) traverse l'autre pièce (131) avec du jeu et que les deux pièces reposent côte à côte axialement avec des faces d'appui qui sont constitués pour l'une des pièces (132) par un collet (52) sur le diamètre externe, pour l'autre pièce (131) par un collet (51) sur le diamètre interne.

4. Servo-frein selon la revendication 3, caractérisé en ce que la surface d'appui (531) de l'une des pièces possède une forme sphérique en coupe, qui permet un mouvement articulé des deux pièces (131, 132) entre elles.

5. Servo-frein selon la revendication 3, caractérisé en ce qu'entre les surfaces d'appui des deux pièces (131, 132) ou intercale une rondelle élastique et qu'ainsi on obtient une liaison articulée.

*Fig. 1*

*Fig. 2*

*Fig. 3*

*Fig. 4*

EP 0 290 785 B1